# EUROPEAN PATENT APPLICATION

(11) **EP 4 773 418 A1**
(43) Date of publication of application: **08.07.2026**
(21) Application number: 25869575.8
(22) Date of filing: 10.01.2025
(51) Int. Cl.: H01M 50/552, H01M 10/613, H01M 10/653

(54) **TERMINAL POST, TERMINAL ASSEMBLY AND BATTERY**

(30) Priority: 11.10.2024 CN 202411421668
(71) Applicant: HUIZHOU EVE POWER CO., LTD, Huizhou, Guangdong 516039 (CN); Eve Power Co., Ltd., Jingmen, Hubei 448000 (CN)
(72) Inventor: Wei, Chenyang, Huizhou, Guangdong 516039 (CN); Shu, Kuanjin, Huizhou, Guangdong 516039 (CN); Duan, Dong, Huizhou, Guangdong 516039 (CN); Liu, Ziwen, Huizhou, Guangdong 516039 (CN); He, Wei, Huizhou, Guangdong 516039 (CN); Zheng, Xu, Huizhou, Guangdong 516039 (CN)
(74) Representative: Zhu, Puxing
(86) International application number: PCT/CN2025/071799
(87) International publication number: WO 2026/076847

(57) **Abstract**

The present application provides a pole, a terminal assembly, and a battery cell. The pole includes: a base (1) including a first surface (11); and a cylindrical body (2) disposed on the first surface (11). The cylindrical body (2) includes a second surface (23) away from the base (1), the second surface (23) is provided with a heat conduction groove (3), and the heat conduction groove (3) is filled with a heat conduction material (4).

## Description

This application claims priority to Chinese Patent Application No. 202411421668.3 filed on October 11, 2024, the entire contents of which are incorporated herein by reference.

### TECHNICAL FIELD

The present application relates to the technical field of battery heat dissipation, in particular to a pole, a terminal assembly, and a battery cell.

### BACKGROUND

In related arts, in order to save costs, a pole of a battery cell is processed to form a sunk platform so that a relatively large recess is formed on the pole.

### SUMMARY

However, the design of the sunk platform leads to a reduction of an overcurrent area of the pole, and the reduction of the overcurrent area will lead to the increase of an overcurrent temperature rise of the pole to a certain extent, thereby leading to the increase of a temperature at the center of the pole, and in turn leading to the serious heat accumulation in the battery cell. At this time, if the heat is not dissipated in time, it may cause thermal runaway in the battery cell.

Some implementations of the present application provide a pole, a terminal assembly, and a battery cell, which can alleviate the phenomenon of thermal runaway of a battery cell caused by the increase of an overcurrent temperature rise of a pole in related arts.

In a first aspect, some implementations of the present application provide a pole, including:
a base including a first surface; and
a cylindrical body disposed on the first surface and including a second surface away from the base, the second surface being provided with a heat conduction groove, and the heat conduction groove being filled with a heat conduction material.

In a second aspect, some implementations of the present application provide a terminal assembly, including: a terminal pressing block provided with a through hole; and the pole as described above. An end of the cylindrical body away from the base is penetrated in the through hole and connected with the terminal pressing block.

In a third aspect, some implementations of the present application provide a battery cell, including the terminal assembly as described above.

### BENEFICIAL EFFECTS

In the present application, by providing a heat conduction groove on a second surface of a cylindrical body of a pole away from a base, and filling a heat conduction material in the heat conduction groove, it helps to accelerate the heat dissipation of the pole and avoid the problem of heat accumulation caused by the increase of an overcurrent temperature rise of the pole, thereby reducing the risk of thermal runaway in the battery cell caused by the heat accumulation of the pole.

### BRIEF DESCRIPTION OF DRAWINGS

In order to more clearly explain the technical proposals in the embodiments of the present application, the accompanying drawings necessary for use in the description of the embodiments will be briefly described below.
FIG. 1 is a schematic structural diagram of a pole provided by some implementations of the present application.
FIG. 2 is a schematic structural diagram of a cylindrical body provided by some implementations of the present application.
FIG. 3 is a schematic structural diagram of another cylindrical body provided by some implementations of the present application.
FIG. 4 is a schematic structural diagram of another pole provided by some implementations of the present application.
FIG. 5 is a schematic structural diagram of yet another pole provided by some implementations of the present application.
FIG. 6 is a schematic structural diagram of a cylindrical body provided by some implementations of the present application.
FIG. 7 is a schematic structural diagram of a heat conduction groove provided by some implementations of the present application.
FIG. 8 is a cross-sectional view of a cylindrical body provided by some implementations of the present application.
FIG. 9 is a cross-sectional view of yet another cylindrical body provided by some implementations of the present application.
FIG. 10 is a cross-sectional view of another cylindrical body provided by some implementations of the present application.
FIG. 11 is a schematic diagram of an area filled by a heat conduction material provided by some implementations of the present application.
FIG. 12 is a schematic structural diagram of a terminal assembly provided by some implementations of the present application.

### Reference numerals:

1, base; 2, cylindrical body; 3, heat conduction groove; 4, heat conduction material; 5, sealing member; 6, terminal pressing block; 11, first surface; 21, first cylindrical section; 22, second cylindrical section; 23, second surface; 61, third surface; 62, sunk platform.

### DETAILED DESCRIPTION

With the advancement of fast charging technology, the heat accumulation in a battery cell has become more and more serious. If the heat is not dissipated in time, it may cause thermal runaway in the battery cell. In related arts, for a negative terminal cap, a pole is divided into an upper pole, a lower pole, and a base. The lower pole and the base are made of the same material and are connected together by welding, and the upper pole is connected to the lower pole. In order to ensure the welding strength, a sunk platform needs to be designed on the upper pole. As a result, on one hand, it leads to high processing costs, and on the other hand, there is a gap between a negative pole and a tab, reducing a heat conduction area, and the reduced heat conduction area is unfavorable for addressing the problem of heat accumulation in the battery cell. In addition, in order to save materials and reduce costs, a depth dimension and a width dimension of a sunk platform of the upper pole are set relatively large, such that a relatively large recess is formed on the upper pole, leading to a reduction of an overcurrent area of the pole and an increase of an overcurrent temperature rise of the pole. Furthermore, due to a low heat transfer coefficient of the air domain, a temperature at the center of the pole increases. This is also not conducive to solving the problem of heat accumulation in the battery cell.

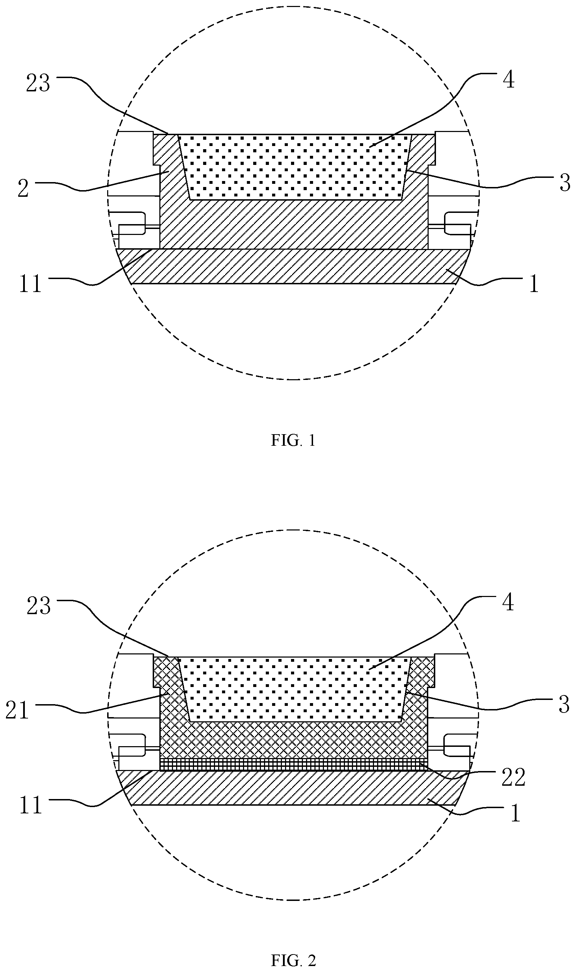

Please refer to FIG. 1, and FIG. 1 is a schematic structural diagram of a pole provided by some implementations of the present application. Embodiments of the present application provide a pole, including: a base 1 including a first surface 11; and a cylindrical body 2 disposed on the first surface 11. The cylindrical body 2 includes a second surface 23 away from the base 1, the second surface 23 is provided with a heat conduction groove 3, and the heat conduction groove 3 is filled with a heat conduction material 4.

In the embodiments of the present application, the heat conduction groove 3 provided on the second surface 23 of the cylindrical body 2 of the pole is filled with the heat conduction material 4, which increases a heat conduction area of the pole, is conducive to accelerating the heat dissipation of the pole, and avoids the problem of heat accumulation of the pole due to the increase of an overcurrent temperature rise, thereby reducing the risk of thermal runaway in a battery cell caused by the heat accumulation of the pole.

Please refer to FIG. 2, and FIG. 2 is a schematic structural diagram of a cylindrical body provided by some implementations of the present application (unit in the figure: mm). In some embodiments of the present application, the cylindrical body 2 includes a first cylindrical section 21 and a second cylindrical section 22 connected to each other along an axial direction of the cylindrical body 2. An end of the second cylindrical section 22 away from the first cylindrical section 21 is connected to the base 1. In the axial direction of the cylindrical body 2, a height of the first cylindrical section 21 is H₁, a depth of the heat conduction groove 3 is H₂, satisfying 0.09 mm ≤ H₂ ≤ 0.9Hi.

In the embodiments, by making the cylindrical body 2 include the first cylindrical section 21 and the second cylindrical section 22 connected to each other along the axial direction of the cylindrical body 2, when the pole is connected to a terminal pressing block 6, the first cylindrical section 21 and the second cylindrical section 22 can be installed into a through hole on the terminal pressing block 6 from both sides of the terminal pressing block 6, respectively, and welded together. This facilitates a relatively convenient connection between the pole and the terminal pressing block 6. The heat conduction groove 3 is formed on the first cylindrical section 21, so a depth H₂ of the heat conduction groove 3 is closely related to a height H1 of the first cylindrical section 21. When designing the heat conduction groove 3, it is necessary to consider not only the impact of the depth H₂ of the heat conduction groove 3 on the heat dissipation effect, but also the impact of the depth H₂ of the heat conduction groove 3 on the first cylindrical section 21. In the embodiments, the depth H₂ of the heat conduction groove 3 and the height H₁ of the first cylindrical section 21 should satisfy 0.09 mm ≤ H₂ ≤ 0.9H₁. When the depth H₂ of the heat conduction groove 3 is within this range, both an overcurrent performance of the pole and a structural strength of the first cylindrical section 21 can be ensured.

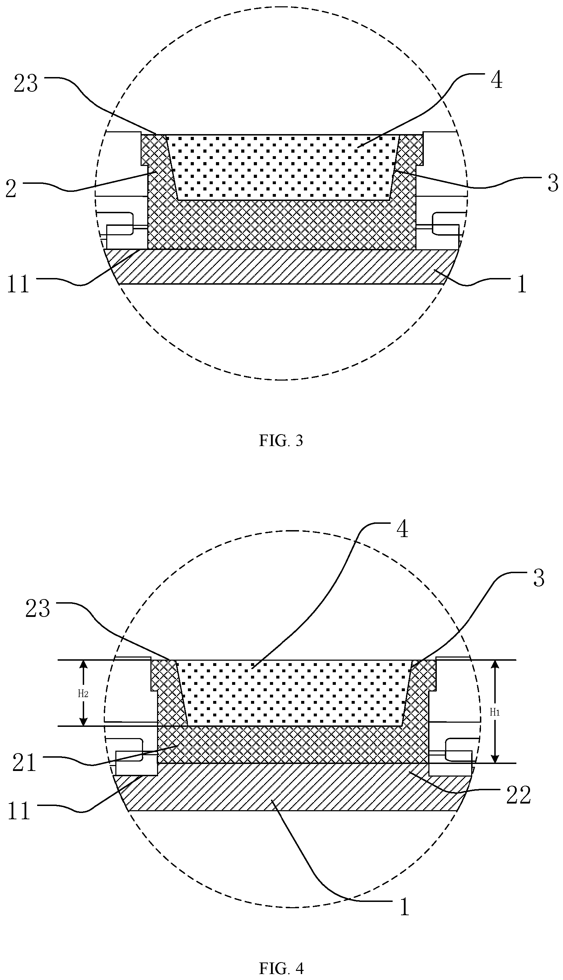

Please refer to FIG. 3 and FIG. 4, FIG. 3 is a schematic structural diagram (unit in the figure: mm) of another cylindrical body provided by some implementations of the present application, and FIG. 4 is a schematic structural diagram (unit in the figure: mm) of another pole provided by some implementations of the present application. In some embodiments of the present application, the first cylindrical section 21 and the second cylindrical section 22 are integrally formed. Alternatively, the second cylindrical section 22 is integrally formed with the base 1.

In some embodiments of the present application, the cylindrical body 2 is an integral structure, and the cylindrical body 2 is welded to the base 1. At this time, the cylindrical body 2 can be penetrated into the through hole on the terminal pressing block 6 from a side of the terminal pressing block 6 away from the base 1, and then welded to the base 1 to help realize the connection between the pole and the terminal pressing block 6 more conveniently. When the second cylindrical section 22 is integrally formed with the base 1, the second cylindrical section 22 extends from the first surface 11 of the base 1 and is integrally formed with the base 1, thereby increasing the heat conduction area of the battery cell, improving an overcurrent capacity of the battery cell, and thus improving the safety of the battery cell. At the same time, the integral formation of the second cylindrical section 22 and the base 1 further reduces the processing costs.

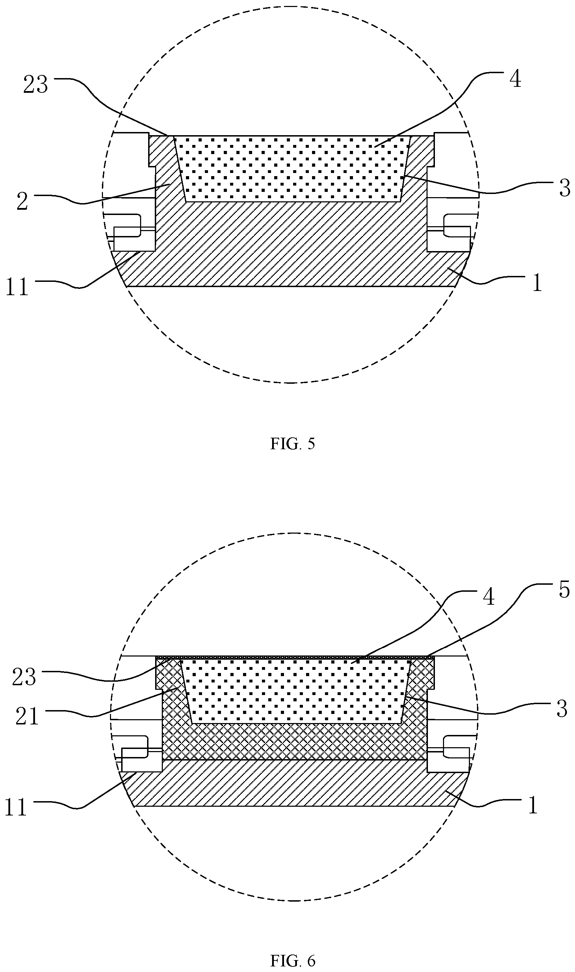

Please refer to FIG. 5, and FIG. 5 is a schematic structural diagram of yet another pole provided by some implementations of the present application. In some embodiments of the present application, the cylindrical body 2 is integrally formed with the base 1.

In the embodiments of the present application, the cylindrical body 2 is integrally formed with the base 1. At this time, the pole and the terminal pressing block 6 can be connected by riveting. Furthermore, compared with the pole provided with separate sections in the related arts, it can reduce processing steps, save processing costs, and avoid a reduction in the heat conduction area caused by the gap between the negative pole and the tab, thereby helping to address the problem of heat accumulation within the battery cell.

Please refer to FIG. 6, and FIG. 6 is a schematic structural diagram of a cylindrical body according to some implementations of the present application. In some embodiments of the present application, the heat conduction material 4 includes a phase change material, and the phase change material is filled in the heat conduction groove 3. The pole further includes a sealing member 5, and the sealing member 5 seals a notch of the heat conduction groove 3.

In the embodiments, the heat conduction material 4 is a phase change material. Since a physical state of the phase change material changes when a temperature reaches a phase change temperature, in order to prevent a new product generated after the change of the physical state of the phase change material from affecting the performance of the battery cell, in the embodiments of the application, the sealing member 5 (see FIG. 6) for sealing the heat conduction groove 3 is provided in the notch of the heat conduction groove 3, so that the phase change material is limited in a sealed space. The embodiments not only increase the heat conduction area of the pole, which is beneficial to heat dissipation of the pole, avoids safety risks caused by heat accumulation of the pole, but also avoids the problem of escape of the phase change material due to becoming a gas phase state.

In some embodiments of the present application, the sealing member 5 completely covers the second surface 23.

Referring to FIG. 6, the sealing member 5 in the embodiments completely covers the second surface 23 of the cylindrical body 2, which is more conducive to heat dissipation of the cylindrical body 2, and also alleviates the situation of heat accumulation in the battery cell.

In some embodiments of the present application, the sealing member 5 includes an aluminum sheet, a plastic sheet, or a potting glue, and a thickness of the scaling member 5 ranges from 0.05 mm to 0.5 mm.

The sealing member 5 in the embodiments is configured to seal the heat conduction groove 3, and by setting the thickness of the sealing member 5 between 0.05 mm and 0.5 mm, it is helpful to save materials while ensuring the sealing effect. Obviously, the thickness, material, and the like of the sealing member 5 in the above embodiments are examples, and do not constitute a limitation of the present application.

In some embodiments of the present application, the heat conduction groove 3 is arranged coaxially with the cylindrical body 2.

In the embodiments, the heat conduction groove 3 is arranged coaxially with the cylindrical body 2, so that the heat conduction groove 3 is located at a middle position of the cylindrical body 2, thereby avoiding the situation that the heat dissipation effect of different parts of the cylindrical body 2 is different. The heat conduction material 4 is fully utilized to dissipate heat from the pole, thereby avoiding the safety risk caused by the heat accumulation of the pole. At the same time, it also helps to ensure a structural strength of the pole, and avoids problems such as easy collapse of a groove wall of the heat conduction groove 3 and difficulty in welding an edge of the pole and the terminal pressing block 6 due to eccentric setting.

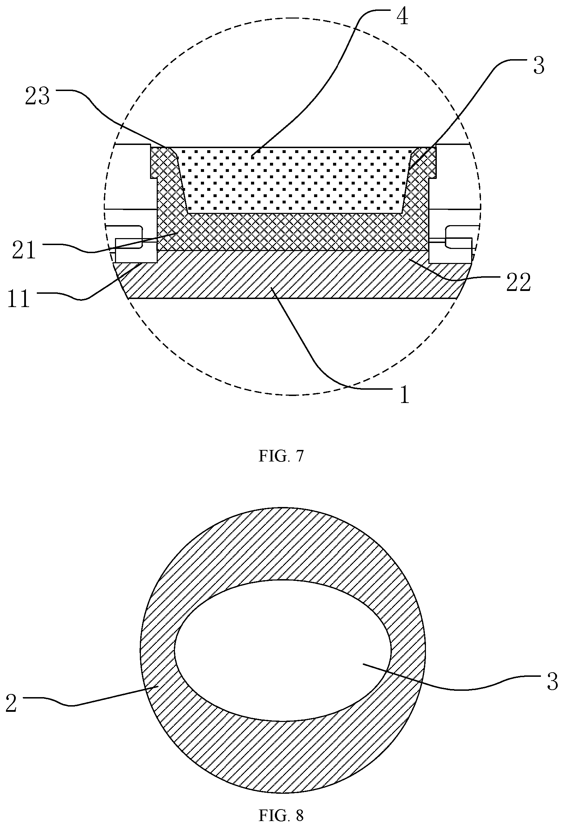

Please refer to FIG. 7, and FIG. 7 is a schematic structural diagram of a heat conduction groove provided by some implementations of the present application. In some embodiments of the present application, the notch of the heat conduction groove 3 is chamfered.

In the embodiments of the present application, the notch of the heat conduction groove 3 is chamfered to increase a size of the notch of the heat conduction groove 3, which helps to fill the heat conduction groove 3 with the heat conduction material 4.

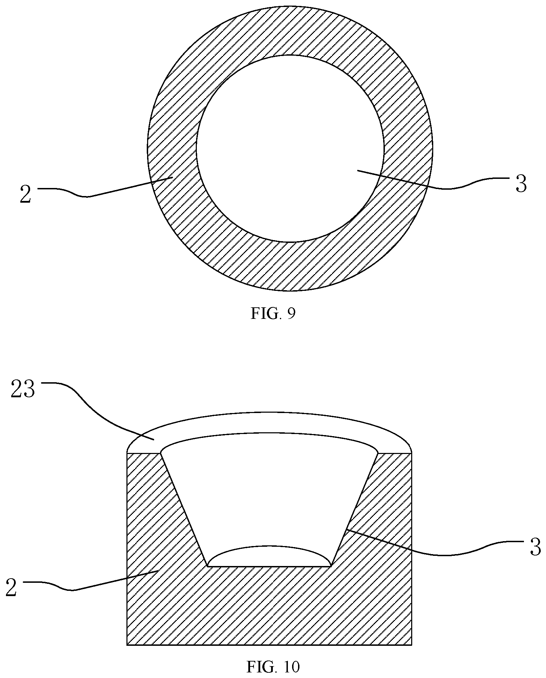

Please refer to FIG. 8 and FIG. 9, FIG. 8 is a cross-sectional view of a cylindrical body provided by some implementations of the present application, and FIG. 9 is a cross-sectional view of yet another cylindrical body provided by some implementations of the present application. In some embodiments of the present application, a cross section of the heat conduction groove 3 is circular or elliptical in a direction perpendicular to a central axis of the heat conduction groove 3.

A main purpose of providing the heat conduction groove 3 on the cylindrical body 2 of the pole is to enhance the heat dissipation effect of the pole and avoid the safety risk caused by the heat accumulation of the pole. Therefore, in the embodiments, a cross-sectional shape of the heat conduction groove 3 is designed to be circular or oval. Compared with other cross-sectional shapes, the heat conduction groove 3 corresponding to the cross-sectional shape in the embodiments can accommodate more heat conduction material 4, and at the same time, a flow resistance of the heat conduction material 4 is reduced. Therefore, the heat dissipation effect of the pole is also better, effectively avoiding the safety risk caused by the heat accumulation of the pole, and solving the technical problem of serious heat accumulation in the battery cell, which may cause thermal runaway in the battery cell.

In some embodiments of the present application, an included angle between the groove wall of the heat conduction groove 3 and the central axis of the heat conduction groove 3 is 0, which satisfies: 0° ≤ 0 ≤ 60°.

In the embodiments, the included angle between the groove wall of the heat conduction groove 3 and the central axis of the heat conduction groove 3 is selected within a range of 0° to 60° (including 0° and 60°), so that the heat conduction material 4 can completely fill the heat conduction groove 3, and there is no filling dead angle (that is, a space that the heat conduction material 4 cannot fill), which not only ensures the heat dissipation effect of the pole, but also ensures the strength of the cylindrical body 2 of the pole.

Please refer to FIG. 10, and FIG. 10 is a cross-sectional view of another cylindrical body provided by some implementations of the present application. In some embodiments of the present application, a radial dimension of the heat conduction groove 3 gradually decreases along a depth direction of the heat conduction groove 3.

In the present application, the heat dissipation area of the pole is increased by filling the heat conduction material 4 in the heat conduction groove 3. Therefore, when designing the heat conduction groove 3, the convenience of filling the heat conduction material 4 and whether the heat conduction material 4 can completely fill the heat conduction groove 3 should be considered. In the embodiments, the radial dimension of the heat conduction groove 3 is gradually reduced along the depth direction of the heat conduction groove 3, which helps to reduce the difficulty of filling the heat conduction material 4 to a bottom of the heat conduction groove 3, facilitates filling the heat conduction material 4, and can ensure that the heat conduction material 4 can completely fill the heat conduction groove 3, and there is no filling dead angle (that is, the space that the heat conduction material 4 cannot fill). The heat conduction material 4 completely fills the heat conduction groove 3, increasing the heat dissipation area of the pole, avoiding the safety risks caused by heat accumulation of the pole, and addressing the technical problem of potential thermal runaway in of the battery cell due to internal heat accumulation in the battery cell.

In some embodiments of the present application, the heat conduction material 4 includes a potting glue or a heat conduction gel.

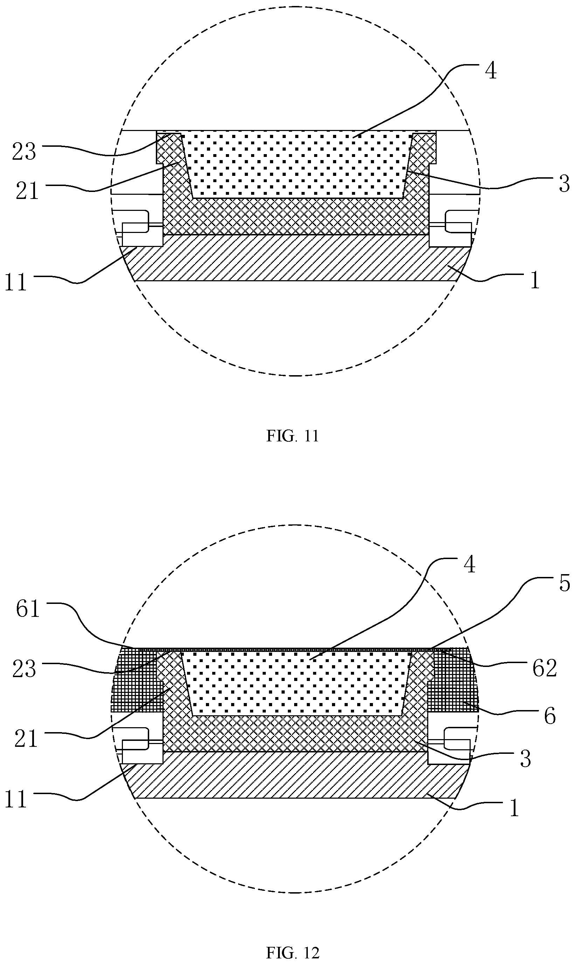

In the embodiments, the heat conduction glue may be a cured potting glue or a heat conduction gel. Since a physical state of the heat conduction glue is stable and is not easy to change, when the heat conduction material 4 is the heat conduction glue, the heat conduction glue can be directly made to completely fill the heat conduction groove 3 without additionally sealing the heat conduction groove 3. Alternatively, the heat conduction groove 3 and a planned space for the sealing member 5 are completely filled with the heat conduction glue, as illustrated in FIG. 11. Obviously, the specific types of heat conduction glue in the above embodiments are all examples, and do not constitute a limitation of the present application.

On the other hand, the embodiments of the present application also provide a terminal assembly, including: the terminal pressing block 6 provided with the through hole; and the pole as described above. The end of the cylindrical body 2 away from the base 1 is penetrated into the through hole and connected with the terminal pressing block 6.

In some embodiments of the present application, the terminal pressing block 6 has a third surface 61 away from the base 1. The third surface 61 is provided with a sunk platform 62 around the through hole, a platform surface of the sunk platform 62 is flush with the second surface 23, and the sealing member 5 of the pole is disposed on the second surface 23 and the platform surface of the sunk platform 62. The third surface 61 is flush with a surface of the sealing member 5 away from the cylindrical body 2.

Please refer to FIG. 12, and FIG. 12 is a schematic structural diagram of a terminal assembly provided by some implementations of the present application. In the embodiment of the present application, by making the platform surface of the sunk platform 62 flush with the second surface 23, it is helpful to facilitate the setting of the sealing member 5. By making the third surface 61 flush with the surface of the sealing member 5 away from the cylindrical body 2, it is helpful to ensure the flatness of the terminal assembly on the side corresponding to the third surface 61.

In another aspect, embodiments of the present application also provide a battery cell including the terminal assembly as described above.

## Claims

1. A pole, comprising:
a base comprising a first surface; and
a cylindrical body disposed on the first surface, wherein the cylindrical body comprises a second surface away from the base, the second surface is provided with a heat conduction groove, and the heat conduction groove is filled with a heat conduction material.

2. The pole according to claim 1, wherein the cylindrical body comprises a first cylindrical section and a second cylindrical section connected to each other in an axial direction of the cylindrical body, the second surface is an end surface of the first cylindrical section away from the second cylindrical section, and an end of the second cylindrical section away from the first cylindrical section is connected to the base; in the axial direction of the cylindrical body, a height of the first cylindrical section is H₁ and a depth of the heat conduction groove is H₂, satisfying: 0.09 mm ≤ H₂ ≤ 0.9H₁.

3. The pole according to claim 2, wherein the first cylindrical section is integrally formed with the second cylindrical section; or, the second cylindrical section is integrally formed with the base.

4. The pole according to claim 1, wherein the cylindrical body is integrally formed with the base.

5. The pole according to claim 1, wherein the heat conduction material comprises a phase change material, and the pole further comprises a sealing member that seals a notch of the heat conduction groove.

6. The pole according to claim 5, wherein the sealing member completely covers the second surface.

7. The pole according to claim 5, wherein the sealing member is an aluminum sheet, a plastic sheet, or a potting glue, and/or a thickness of the sealing member ranges from 0.05 mm to 0.5 mm.

8. The pole according to any one of claim 1 to claim 7, wherein the heat conduction groove is disposed coaxially with the cylindrical body.

9. The pole according to any one of claim 1 to claim 7, wherein a notch of the heat conduction groove is chamfered.

10. The pole according to any one of claim 1 to claim 7, wherein a cross section of the heat conduction groove is circular or elliptical in a direction perpendicular to a central axis of the heat conduction groove.

11. The pole according to claim 10, wherein an included angle between a groove wall of the heat conduction groove and the central axis of the heat conduction groove is 0, which satisfies: 0° ≤ 0 ≤ 60°.

12. The pole according to claim 11, wherein a radial dimension of the heat conduction groove gradually decreases along a depth direction of the heat conduction groove.

13. The pole according to claim 1, wherein the heat conduction material comprises a potting glue or a heat conduction gel.

14. A terminal assembly, comprising:
a terminal pressing block provided with a through hole; and
the pole of any one of claim 1 to claim 13,
wherein an end of the cylindrical body away from the base is penetrated into the through hole and connected with the terminal pressing block.

15. The terminal assembly according to claim 14, wherein the terminal pressing block comprises a third surface away from the base, the third surface is provided with a sunk platform around the through hole, a platform surface of the sunk platform is flush with the second surface of the pole, a sealing member of the pole is disposed on the second surface and the platform surface of the sunk platform, and the third surface is flush with a surface of the sealing member away from the cylindrical body.

16. A battery cell, comprising the terminal assembly of claim 14 or claim 15.
